# FASCICULE DE BREVET EUROPEEN

(11) **EP 3 119 600 B1**
(45) Date de publication et mention de la délivrance du brevet: **07.11.2018**
(21) Numéro de dépôt: 14715037.9
(22) Date de dépôt: 17.03.2014
(51) Int. Cl.: B32B 1/02, B32B 7/06, A47L 23/26, A47G 27/02, B65D 25/14

(54) **RECIPIENT PERFECTIONNE POUR PRODUITS SALISSANT ET DECONTAMINANT**
VERBESSERTER BEHÄLTER FÜR REINIGUNGS- UND UNORDENTLICHE PRODUKTE
IMPROVED CONTAINER FOR CLEANING AND MESSY PRODUCTS

(43) Date de publication de la demande: 25.01.2017
(73) Titulaire: Pull-Liner Innovations, 75008 Paris (FR)
(72) Inventeur: CALDAS, Raphaël, 92000 Nanterre (FR)
(86) Numéro de dépôt international: PCT/FR2014/000056
(87) Numéro de publication internationale: WO 2015/140416

(56) Documents cités:
- EP-A1- 1 601 581
- DE-A1- 2 801 636
- DE-A1- 4 102 326
- DE-U1- 29 911 216
- GB-A- 1 340 636
- US-A- 4 107 811
- US-A- 4 559 250

## Description

La présente invention se réfère au brevet européen n° 1601581 qui décrit un récipient pour produits salissants intégrant des moyens pour assurer son propre nettoyage, composé d'une ossature recouverte d'une superposition de membranes dont chacune est équipée de moyens d'assemblage par adhérence d'au moins une partie d'au moins une de ses faces de contact avec la ou les membranes contigües permettant la séparation des dites membranes par effet de pelage. Ces moyens d'assemblage sont constitués par une multitude de protubérances à accrochage mécanique. Le système décrit dans ce brevet permet le nettoyage dudit récipient après utilisation en retirant par pelage une à une les membranes souillées. La présente invention a pour objet une série de perfectionnements de ce brevet dans le domaine des matériaux utilisés et dans le domaine des procédés d'obtention du récipient à partir de ces matériaux.

Ces perfectionnements concernent plus particulièrement le mode d'assemblage entre elles des membranes réalisées avec ces matériaux et ont pour but d'améliorer la qualité du produit et sa facilité d'utilisation. Le but recherché consiste à réaliser un récipient à la fois plus compact et rigide en période de travail et plus aisément nettoyable par élimination plus facile des membranes souillées en facilitant leur séparation par pelage.

Les perfectionnements concernant les procédés d'obtention ont pour but d'améliorer la productivité et la souplesse d'organisation industrielle en fractionnant la production en opérations élémentaires permettant de fabriquer les dits récipients partiellement et successivement dans des unités de production différentes, utilisant ainsi de façon optimale des installations industrielles existantes réparties dans de nombreux pays. A cet effet, il est d'abord réalisé un semi-produit en forme de nappe facile à stocker et à transporter qui sert ensuite de matière première pour la mise en forme des récipients.

En outre les perfectionnements concernant les dits matériaux apportent soit une meilleure adaptation aux dits procédés d'obtention, soit un plus faible impact écologique, soit une extension du domaine d'application du concept de ce récipient à de nouveaux produits dérivés comme décrit ci-après.

Le principal perfectionnement, selon l'invention, dudit récipient pour produits salissants qui est composé d'une ossature recouverte d'une superposition de membranes assemblées entre elles, de façon séparable par effet de pelage, par une multitude de protubérances à accrochage mécanique, consiste à alterner une à une dans ladite superposition deux sortes de membranes qui ne sont pas soudables l'une à l'autre à chaud. Mais, en complément, la présente invention décrit une panoplie de choix de matériaux et de traitement des surfaces de contact des membranes entre elles qui constituent autant d'autres perfectionnements.

Ainsi, est revendiqué, comme choix de matériaux pour constituer ladite superposition, l'utilisation de membranes réalisées soit en polyéthylène (PE), soit en polyéthylène Téréphtalate (PET) soit en chlorure de polyvinyle (PVC), soit en polypropylène (PP), ou en polystyrène(PS). Il sera possible d'alterner de telles membranes une à une avec des membranes d'une toute autre nature non soudables à chaud avec ces matériaux et on pourra également alterner des membranes réalisées avec deux matières plastiques différentes non soudables entre elles et, par exemple, deux des matières plastiques précitées.

Par ailleurs, pour réaliser ladite superposition, il est d'abord proposé de choisir des membranes dont l'état de surface présente, ne serait-ce qu'à une échelle microscopique, une rugosité naturelle faite de protubérances capables de s'interpénétrer d'une membrane à l'autre pour permettre un accrochage mécanique entre elles. Par contre, il peut être nécessaire pour obtenir cette propriété, de réaliser des traitements spécifiques des surfaces de contact de ces membranes, soit par déformation locale, soit par enlèvement de matière (sablage, grattage, grenaillage, etc...) ou par rajout de matière comme décrit ci-après. Pour ce faire, un des perfectionnements consistera à imprimer sur ces membranes, à chaud et sous pression, une multitude de protubérances par passage de chaque membrane ou de l'ensemble des membranes constituant ladite superposition entre des rouleaux presseurs à relief. Un autre perfectionnement, pour obtenir cette multitude de protubérances, consistera à créer un dépôt d'encre sur ces surfaces de contact, en utilisant des techniques de pulvérisation ou de sérigraphie. Cette création de rugosité de l'état de surface des dites membranes pourra être obtenue également par un autre perfectionnement dudit récipient consistant à obtenir ladite multitude de protubérances à accrochage mécanique par flocage de fibres projetées sur la matière plastique constituant les dites membranes. Dans ce cas, ce dit flocage de fibres pourra en outre être imprégné de fluides ou de poudres ayant des propriétés olfactives, et/ou désinfectantes, et/ou bactériostatiques de sorte que le pelage de chacune des dites membranes après salissure apporte en surface non seulement une membrane propre mais aussi libère les principes actifs des dits fluides ou poudres, stockés dans la superposition, qui accèdent alors à l'air libre. Ladite multitude de protubérances à accrochage mécanique pourra également être obtenue par projection de poudres de particules à caractère olfactif, et/ou désinfectantes, et/ou bactériostatiques, sur la matière plastique des dites membranes rendue adhérente par ramollissement à chaud, de sorte que le pelage de chacune des dites membranes après salissure apporte en surface, non seulement une membrane propre, mais aussi libère les principes actifs des dites poudres, stockées dans la superposition, qui accèdent alors à l'air libre.

Les deux dispositifs décrits précédemment qui permettent de stocker et de libérer progressivement des fluides ou poudres anti-germes trouvent leur application dans la réalisation de tapis de décontamination pour protéger les accès des hôpitaux, cliniques, laboratoires, installations de production agroalimentaires et autres zones sensibles à l'intrusion de germes par les semelles de chaussure souillées des visiteurs. Ils permettent à la fois de réaliser des tapis nettoyables rapidement après salissure, par pelage une à une des membranes les constituant, et d'apporter de surcroit, au niveau de ces tapis, des fonctions supplémentaires liées aux produits qu'ils libèrent afin de protéger ces locaux sensibles de l'intrusion de ces germes et mauvaises odeurs.

La présente invention préconise également la réalisation d'une autre sorte de membranes où ladite multitude de protubérances sera obtenue par expansion de la matière plastique constituant ces membranes par introduction, dans cette matière plastique, d'un agent d'expansion.

Une autre série de perfectionnements concerne la réalisation de ladite ossature. Ainsi il est proposé de réaliser ladite ossature, selon la spécificité des diverses applications de l'invention, soit en carton, soit en fibres comprimées et agglomérées à l'aide d'un liant, soit en matière plastique expansée, soit en matériau composite associant une matière plastique à des microfibres naturelles issues de l'agriculture.

Le récipient selon l'invention est perfectionné également par l'adoption de nouveaux procédés d'obtention de ce récipient et en premier lieu par une nouvelle façon d'obtenir l'accrochage mécanique entre elles des membranes contigües composant ladite superposition. Ce nouveau procédé utilise des moyens d'échauffement sous pression qui, dans un premier temps, produisent une interpénétration aléatoire des protubérances qui tapissent les surfaces de contact de ces membranes contigües, avec formation d'un réseau de pores interconnectés. Dans un deuxième temps, sous l'effet combiné de la pression et du ramolissement de la matière dû à l'échauffement, ces pores interconnectés se comblent progressivement en chassant toute bulle d'air, réalisant ainsi un contact continu des surfaces interconnectées sans soudure, les matériaux utilisés n'étant pas soudables entre eux. Ce procédé permet à la fois un assemblage compact des dites membranes et leur séparation aisée une à une par pelage. Cette séparation par pelage serait très malaisée voire impossible si elles étaient soudées. Les moyens d'échauffement sous pression pour réaliser cette opération sont nombreux dans l'état de la technique. Selon l'invention on utilise particulièrement un tunnel de chauffage associé à au moins un couple de rouleaux presseurs contrarotatifs d'entrainement de la superposition de membranes à l'intérieur de ce tunnel.

Selon l'invention ledit récipient est perfectionné également par deux nouveaux procédés d'obtention du récipient qui mettent en oeuvre un processus comprenant deux phases distinctes. La première phase réalise la superposition des dites membranes adhérentes entre elles et permet l'obtention d'un semi-produit en forme de nappe. La seconde phase réalise la mise en forme par thermoformage ou thermocompression dudit récipient à partir dudit semi produit en forme de nappe.

Selon l'invention ledit produit en forme de nappe peut être obtenu particulièrement, mais non exclusivement, selon deux techniques. La première technique consiste à extruder à chaud simultanément à travers des filières parallèles autant de films de matière plastique qu'il y a de membranes dans la superposition. Ces films adhèrent ensuite entre eux avant refroidissement en passant entre des rouleaux de compression. La seconde technique consiste à dévider simultanément autant de films plastiques stockés en bobines qu'il y a de membranes dans la superposition puis à entraîner et passer ces films superposés dans un tunnel de chauffage et entre au moins un couple de rouleaux de compression.

Le semi produit en forme de nappe ainsi constitué, par exemple selon ces deux techniques, est ensuite fractionné en panneaux successifs reliés les uns aux autres par une suite de charnières souples créée par rainurage, permettant un pliage en accordéon pour constituer des ramettes de stockage . Les ramettes sont ensuite acheminées sur palettes de transport vers des ateliers de thermoformage où chaque panneau permettra l'emboutissage d'un ou plusieurs récipients.

D'autres caractéristiques et avantages de l'invention apparaîtront au cours de la description qui va suivre et faite en référence aux dessins annexés sur lesquels :
- La Fig. 1 est une vue schématique en coupe longitudinale d'une installation de production des dits semi produits en forme de nappe illustrant un procédé d'obtention, conforme à l'invention, dudit récipient.
- La Fig. 2 est une vue schématique en coupe transversale d'un perfectionnement dudit récipient permettant la réalisation d'un tapis de décontamination.
- La Fig. 3 est une vue schématique grossie illustrant en quatre stades l'interpénétration des protubérances permettant l'accrochage entre elles des membranes de ladite superposition.

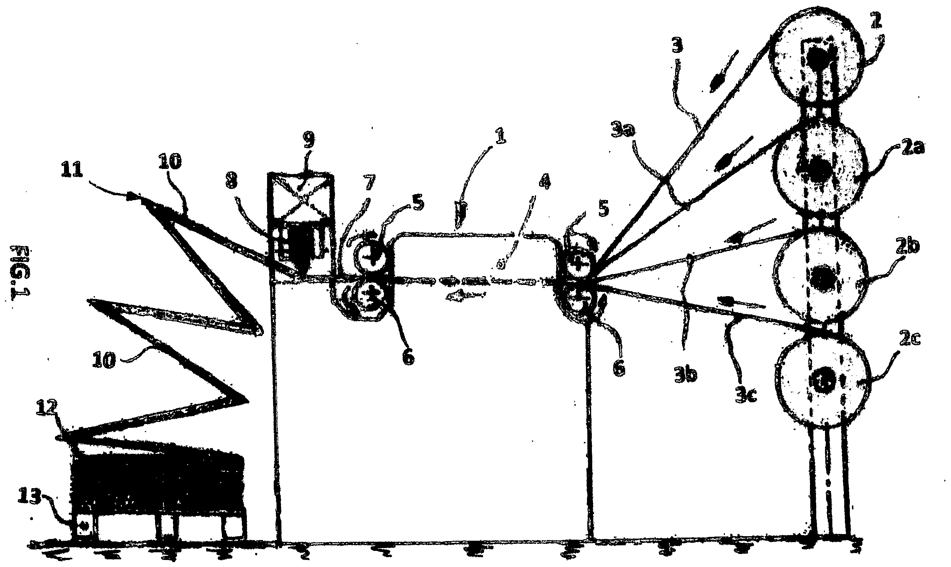

Sur la Fig. 1, on a représenté, à titre d'exemple non limitatif, une installation de production (1) des semi-produits en forme de nappe. Cette installation est composée d'une série de bobines (2, 2a, 2b, 2c) de stockage de films plastiques (3, 3a, 3b, 3c) qui sont dévidés simultanément et dirigés vers une zone de chauffage (4) par les rouleaux presseurs antagonistes (5) et (6) tournant en sens inverse. A la sortie de cette zone de chauffage (4) la superposition des films plastiques (3 à 3c) constitue une seule nappe (7) encore chaude qui est rainurée à intervalles réguliers à l'aide d'une molette (8) manoeuvrée transversalement le long d'une glissière (9) pour délimiter une suite de panneaux (10) qui restent reliés les uns aux autres par une sorte de charnière souple (11) créée par le rainurage. Poussée par l'avancement de la nappe qui est généré par les couples de rouleaux d'entrainement (5,6), cette suite de panneaux se replie en accordéon à l'arrière de l'installation de production (1) où elle s'empile pour former une ramette de stockage (12) qui se dépose sur une palette de transport (13).

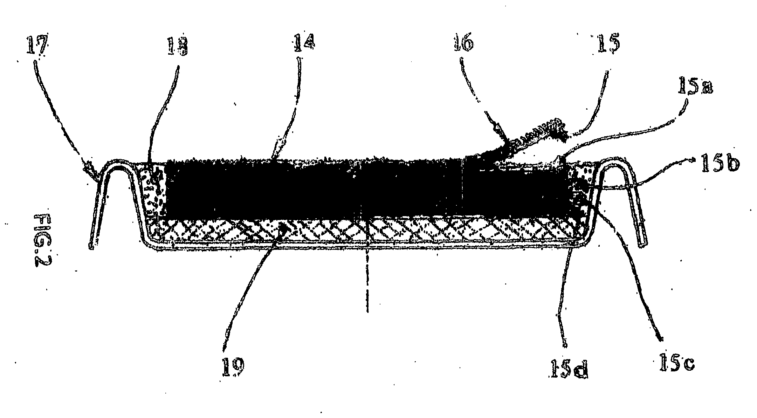

Sur la Fig. 2, on a représenté, à titre d'exemple non limitatif, un perfectionnement dudit récipient permettant la réalisation d'un tapis de décontamination où la superposition (14) comprend une série de membranes (15 à 15d) adhérant les unes aux autres grâce à une multitude de une série de membranes (15 à 15d) adhérant les unes aux autres grâce à une multitude de protubérances à accrochage mécanique qui est ici créée par un flocage de fibres (16). Cette superposition est installée au fond d'une ossature (17) en forme d'auge. Cette ossature, étanche et sensiblement rigide, est emplie d'une substance liquide (18) qui imprègne les fibres tapissant les membranes. Avantageusement le fond de cette ossature est garni d'une couche de mousse (19) pour améliorer la souplesse du tapis.

L'utilisation de ce récipient comme tapis de décontamination est facile à comprendre. Installé comme seul accès à l'entrée d'un local à protéger, les visiteurs sont obligés de marcher dessus. Comme un simple tapis-brosse, il permet le nettoyage mécanique des semelles de chaussures dont il emmagasine les impuretés, mais de plus les produits désinfectants et /ou bactériostatiques sous forme liquide (18), contenus dans l'ossature (17) qui imprègnent les fibres (16) tapissant les membranes (15 à 15d), adhèrent sur ces semelles pour détruire les germes indésirables dont elles peuvent être recouvertes. Après un certain nombre de passages de visiteurs, la première membrane (15) de la superposition (14) sera considérée comme souillée. Elle sera retirée par pelage et laissera apparaitre la membrane suivante (15 a) prête à l'emploi et dont les principes actifs seront ainsi mis à l'air libre. On pourra ainsi utiliser successivement toutes les membranes de la superposition jusqu'à la membrane inférieure (15 d). L'installation d'une recharge, sous la forme d'une nouvelle superposition (14) de membranes neuves (15 à 15d), et la réalimentation du récipient constitué par l'ossature (17) avec la substance liquide (18) contenant les produits désinfectants et/ou bactériostatiques, permettra de prolonger l'usage du dispositif un grand nombre de fois.

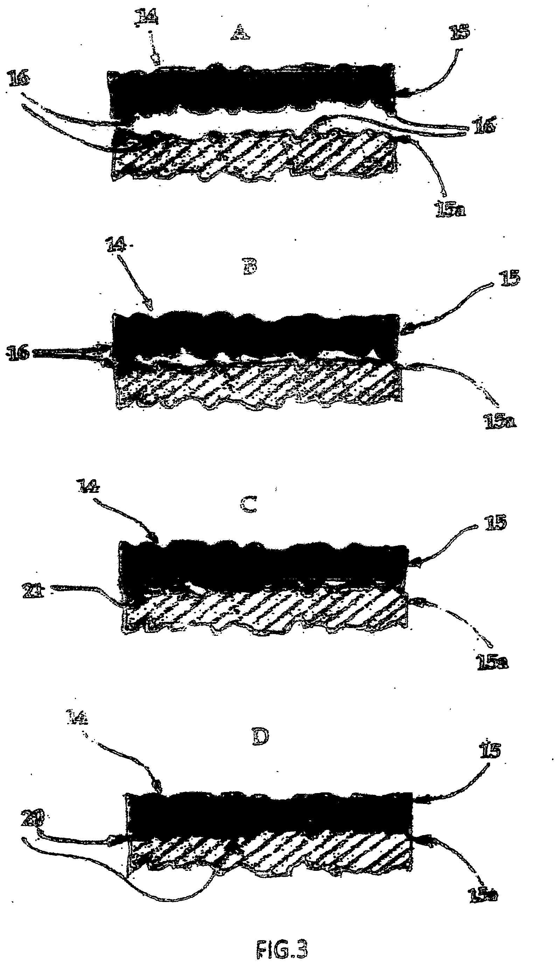

Sur la Fig. 3 on a représenté quatre séquences, repérées A, B, C et D du processus d'accrochage entre elles des membranes (15 à 15d) pour constituer la superposition (14) à l'aide des moyens d'échauffement sous pression. La séquence A montre un détail partiel très grossi des surfaces de contact entre elles de deux membranes contigües (15 et 15a) telles qu'elles se présentent avant leur mise en contact. On voit que chacune de ces deux surfaces comporte une multitude de protubérances (16) qui se font face. La séquence B illustre la mise en contact sans pression de ces mêmes membranes (15 et 15a). La séquence C montre l'action des moyens de mise en pression qui produisent une certaine interpénétration des protubérances (16) des deux membranes (15 et 15a) avec formation de pores (21) qui cependant restent interconnectés. La séquence D montre le résultat de l'action des moyens d'échauffement associés aux moyens de mise en pression qui produisent ensuite, par plastification de la matière, le comblement progressif des pores interconnectés (21) chassant toute bulle d'air et réalisant ainsi une interface (20) d'accrochage et de contact continu entre les deux membranes (15 et 15a).

## Revendications

1. Récipient pour produits salissants composé d'une ossature (17) recouverte d'une superposition (14) de membranes (15 à 15d) dont chacune est équipée de moyens d'assemblage par adhérence avec la ou les membranes contigües permettant la séparation des dites membranes une à une par effet de pelage, les dits moyens d'assemblage étant constitués par une multitude de protubérances à accrochage mécanique (16), **caractérisé en ce que** chaque membrane est produite à partir d'un seul film lui-même constitué d'une seule matière et d'une seule couche et **en ce que** ladite superposition alterne deux sortes de membranes qui sont différentes par leur matière, les matières de ces deux sortes de membranes n'étant pas soudables l'une à l'autre à chaud.

2. Récipient selon la revendication 1, **caractérisé en ce que** les dites protubérances (16) résultent de la rugosité naturelle de l'état de surface des dites membranes (15 à 15d).

3. Récipient selon la revendication 1, **caractérisé en ce que** les dites protubérances (16) résultent du traitement spécifique des surfaces de contact entre elles des dites membranes (15 à 15d) par déformation locale ou bien par enlèvement matière.

4. Récipient selon l'une des revendications 2, 3, **caractérisé en ce que** dans ladite superposition (14) une des dites deux sortes de membranes (15 à 15d) est en polyéthylène (PE).

5. Récipient selon l'une des revendications 2, 3, **caractérisé en ce que** dans ladite superposition (14) une des dites deux sortes de membranes (15 à 15d) est en polyéthylène téréphtalate (PET).

6. Récipient selon l'une des revendications 2, 3, **caractérisé en ce que** dans ladite superposition (14) une des dites deux sortes de membranes (15 à 15d) est en chlorure de polyvinyle (PVC).

7. Récipient selon l'une des revendications 2, 3, **caractérisé en ce que** dans ladite superposition (14) une des dites deux sortes de membranes (15 à 15d) est en polypropylène (PP).

8. Récipient selon l'une des revendications 2, 3, **caractérisé en ce que** dans ladite superposition (14) une des dites deux sortes de membranes (15 à 15d) est en polystyrène (PS).

9. Récipient selon l'une des revendications 2 à 8, **caractérisé en ce que** l'ossature (17) est réalisée en carton.

10. Récipient selon l'une des revendications 2 à 8, **caractérisé en ce que** l'ossature (17) est réalisée en fibres comprimées et agglomérées à l'aide d'un liant.

11. Récipient selon l'une des revendications 2 à 8, **caractérisé en ce que** l'ossature (17) est réalisée en matière plastique expansée.

12. Récipient selon l'une des revendications 2 à 8, **caractérisé en ce que** l'ossature (17) est réalisée en matériau composite associant une matière plastique à au moins une microfibre naturelle issue de l'agriculture.

13. Récipient selon la revendication 12, **caractérisé en ce que** ladite ossature (17) est constituée d'une base rigide qui contient un garnissage en mousse souple aisément déformable.

14. Procédé d'obtention dudit récipient selon l'une quelconque des revendications précédentes **caractérisé en ce que** l'accrochage mécanique entre elles des membranes (15 à 15d) contiguës composant ladite superposition (14) est réalisé à l'aide de moyens d' échauffement sous pression qui produisent l'interpénétration des dites protubérances (16) tapissant leurs surfaces de contact.

15. Procédé d'obtention selon la revendication 14, **caractérisé en ce que** les dits moyens d'échauffement sous pression comblent progressivement, en chassant toute bulle d'air, le réseau des pores interconnectés (21) qui se forme.

16. Procédé selon l'une des revendications 14 et 15, **caractérisé en ce qu'**un dit semi-produit en forme de nappe (7) est obtenu par dévidage simultané de film plastiques (3 à 3c) stockés en bobines (2 à 2c), puis introduction et entraînement de ces films superposés entre au moins un couple de rouleaux de compression (5, 6).

17. Procédé selon l'une des revendications 14 et 15, **caractérisé en ce qu'**un dit semi-produit en forme de nappe (7) résulte de la coextrusion simultanée à chaud des membranes (15 à 15d) le constituant, puis introduction et entraînement de la superposition des dites membranes encore chaudes entre au moins un couple de rouleaux de compression (5, 6).

18. Procédé selon l'une des revendications 16 et 17, **caractérisé en ce que** le semi-produit en forme de nappe est fractionné en panneaux successifs (10) reliés les uns aux autres par une suite de charnières souples (11) créée par rainurage, permettant un pliage en accordéon pour constituer des remettes (12) de stockage et de transport sur palettes (13).

19. Procédé selon la revendication 18, **caractérisé en ce que** le dit rainurage formant les dites charnières souples (11) est traversant par intermittence.

20. Procédé selon l'une des revendications 16 et 17, **caractérisé en ce que** le semi-produit en forme de nappe (7) est, à la sortie d'une zone de chauffage (4), rainuré à intervalles réguliers à l'aide d'une molette (8) manoeuvrée transversalement le long d'une glissière (9) pour délimiter une suite de panneaux (10) qui restent reliés les uns aux autres.

21. Procédé selon l'une des revendications 14 à 20, **caractérisé en ce que** ladite multitude de protubérances (16) résulte de l'expansion des dites membranes (15 à 15d) par introduction d'un agent d'expansion dans la matière plastique les constituants.

22. Procédé selon l'une des revendications 14 à 20, **caractérisé en ce que** ladite multitude de protubérances (16) est imprimée à chaud et sous pression par passage de chacune des membranes (15 à 15d) entre des rouleaux presseurs à relief.

23. Procédé selon l'une des revendications 14 à 20, **caractérisé en ce que** ladite multitude de protubérances (16) est imprimée à chaud et sous pression par passage de l'ensemble des membranes (15 à 15d) constituant ladite superposition (14) entre des rouleaux presseurs à relief.

24. Procédé selon l'une des revendications 14 à 23, **caractérisé en ce que** les dites moyens d'échauffement sous pression sont constitué par un tunnel de chauffage (4) associé à au moins un couple de rouleaux presseurs contrarotatifs (5, 6) d'entraînement en translation de ladite superposition (14) de membranes dans le dit tunnel.

25. Procédé selon l'une des revendications 14 à 24, **caractérisé en ce qu'**il met en oeuvre un processus comprenant deux phases distinctes, une première phase de constitution de la superposition (14) des dites membranes (15 à 15d) adhérentes entre elles qui permet d'obtenir un semi-produit en forme de nappe (7), stocké et transporté plié en ramettes (12) et une deuxième phase dans laquelle on introduit les ramettes dans le processus de mise en forme dudit récipient.

26. Utilisation d'un récipient selon l'une des revendications 1 à 13 en tant que tapis de décontamination pour protéger les accès des hôpitaux, cliniques, laboratoires, installations de productions agroalimentaires et autres zones sensibles à l'intrusion de germes par les semelles de chaussures souillées des visiteurs.

## Patentansprüche

1. Behälter für schmutzaufnehmende Produkte, der aus einem Rahmen (17) gebildet ist, der mit einer Übereinanderschichtung (14) von Membranen (15 bis 15d) bedeckt ist, von denen jede mit Mitteln zur haftenden Verbindung mit der bzw. den angrenzenden Membranen versehen ist, die das einzelne Trennen der Membranen nacheinander durch Abziehen ermöglichen, wobei die Verbindungsmittel aus einer Vielzahl mechanisch koppelnder Vorsprünge (16) gebildet sind,
**dadurch gekennzeichnet, dass** jede Membran aus einer einzigen Folie gefertigt ist, die ihrerseits aus einem einzigen Material und einer einzigen Schicht besteht, und dass die Übereinanderschichtung alternierend zwei Arten von Membranen umfasst, die sich durch ihr Material voneinander unterscheiden, wobei das Material dieser beiden Membranarten nicht durch Heißsiegeln miteinander verschweißbar ist.

2. Behälter nach Anspruch 1,
**dadurch gekennzeichnet, dass** sich die Vorsprünge (16) aus der natürlichen Rauheit des Oberflächenzustands der Membranen (15 bis 15d) ergeben.

3. Behälter nach Anspruch 1,
**dadurch gekennzeichnet, dass** sich die Vorsprünge (16) durch eine spezielle Bearbeitung der zwischen den Membranen (15 bis 15d) bestehenden Kontaktflächen durch lokale Verformung oder durch Materialentfernung ergeben.

4. Behälter nach einem der Ansprüche 2, 3,
**dadurch gekennzeichnet, dass** in der Übereinanderschichtung (14) eine der beiden Membranarten (15 bis 15d) aus Polyethylen (PE) besteht.

5. Behälter nach einem der Ansprüche 2, 3,
**dadurch gekennzeichnet, dass** in der Übereinanderschichtung (14) eine der beiden Membranarten (15 bis 15d) aus Polyethylenterephthalat (PET) besteht.

6. Behälter nach einem der Ansprüche 2, 3,
**dadurch gekennzeichnet, dass** in der Übereinanderschichtung (14) eine der beiden Membranarten (15 bis 15d) aus Polyvinylchlorid (PVC) besteht.

7. Behälter nach einem der Ansprüche 2, 3,
**dadurch gekennzeichnet, dass** in der Übereinanderschichtung (14) eine der beiden Membranarten (15 bis 15d) aus Polypropylen (PP) besteht.

8. Behälter nach einem der Ansprüche 2, 3,
**dadurch gekennzeichnet, dass** in der Übereinanderschichtung (14) eine der beiden Membranarten (15 bis 15d) aus Polystyrol (PS) besteht.

9. Behälter nach einem der Ansprüche 2 bis 8,
**dadurch gekennzeichnet, dass** der Rahmen (17) aus Karton ausgeführt ist.

10. Behälter nach einem der Ansprüche 2 bis 8,
**dadurch gekennzeichnet, dass** der Rahmen (17) aus verpressten und mit Hilfe eines Bindemittels verleimten Fasern ausgeführt ist.

11. Behälter nach einem der Ansprüche 2 bis 8,
**dadurch gekennzeichnet, dass** der Rahmen (17) aus aufgeschäumtem Kunststoff ausgeführt ist.

12. Behälter nach einem der Ansprüche 2 bis 8,
**dadurch gekennzeichnet, dass** der Rahmen (17) aus Verbundwerkstoff ausgeführt ist, der einen Kunststoff mit wenigstens einer aus der Landwirtschaft stammenden natürlichen Mikrofaser verbindet.

13. Behälter nach Anspruch 12,
**dadurch gekennzeichnet, dass** der Rahmen (17) aus einer starren Basis gebildet ist, die eine Auskleidung aus leicht verformbarem Weichschaum enthält.

14. Verfahren zur Erlangung des Behälters nach einem der vorhergehenden Ansprüche,
**dadurch gekennzeichnet, dass** das gegenseitige mechanische Koppeln der die Übereinanderschichtung (14) bildenden, angrenzenden Membranen (15 bis 15d) mit Hilfe von Druckerwärmungsmitteln realisiert wird, die ein gegenseitiges Durchdringen der Vorsprünge (16) bewirken, mit denen die Kontaktflächen bedeckt sind.

15. Verfahren nach Anspruch 14,
**dadurch gekennzeichnet, dass** die Druckerwärmungsmittel allmählich durch Verdrängung aller Luftblasen das sich bildende Gitter der miteinander verbundenen Poren (21) ausfüllen.

16. Verfahren nach einem der Ansprüche 14 oder 15,
**dadurch gekennzeichnet, dass** ein genanntes lagenförmiges Halbzeug (7) durch gleichzeitiges Abrollen von auf Spulen (2 bis 2c) gelagerten Kunststofffolien (3 bis 3c) und anschließend durch Einführen und Transport dieser übereinandergeschichteten Folien zwischen wenigstens einem Presswalzenpaar (5, 6) erhalten wird.

17. Verfahren nach einem der Ansprüche 14 oder 15,
**dadurch gekennzeichnet, dass** ein genanntes lagenförmiges Halbzeug (7) aus der gleichzeitigen Warmkoextrusion der diese bildenden Membranen (15 bis 15d) und dem anschließenden Einführen und Transport der Übereinanderschichtung der noch warmen Membranen zwischen wenigstens einem Presswalzenpaar (5, 6) resultiert.

18. Verfahren nach einem der Ansprüche 16 oder 17,
**dadurch gekennzeichnet, dass** das lagenförmige Halbzeug in aufeinanderfolgende Platten (10) unterteilt ist, die durch eine Reihe durch Rillung erzeugter elastischer Gelenke (11) miteinander verbunden sind, die eine Zickzackfaltung ermöglichen, um Stapel (12) zum Lagern und zum Transport auf Paletten (13) zu bilden.

19. Verfahren nach Anspruch 18,
**dadurch gekennzeichnet, dass** die die elastischen Gelenke (11) bildende Rillung phasenweise unterbrochen ist.

20. Verfahren nach einem der Ansprüche 16 oder 17,
**dadurch gekennzeichnet, dass** das lagenförmige Halbzeug (7) am Austritt eines Heizbereichs (4) mit Hilfe eines entlang einer Schiene (9) quer verschobenen Rändelrades (8) in gleichmäßigen Abständen gerillt wird, um eine Folge von Platten (10) abzugrenzen, die miteinander verbunden bleiben.

21. Verfahren nach einem der Ansprüche 14 bis 20,
**dadurch gekennzeichnet, dass** sich die Vielzahl der Vorsprünge (16) durch die Ausdehnung der Membranen (15 bis 15d) ergibt, indem ein Treibmittel dem Kunststoff zugegeben wird, aus dem diese gebildet sind.

22. Verfahren nach einem der Ansprüche 14 bis 20,
**dadurch gekennzeichnet, dass** die Vielzahl der Vorsprünge (16) unter Druck heißgeprägt werden, indem jede der Membranen (15 bis 15d) zwischen Reliefpresswalzen hindurchgeführt wird.

23. Verfahren nach einem der Ansprüche 14 bis 20,
**dadurch gekennzeichnet, dass** die Vielzahl der Vorsprünge (16) unter Druck heißgeprägt werden, indem die Gesamtheit der die Übereinanderschichtung (14) bildenden Membranen (15 bis 15d) zwischen Reliefpresswalzen hindurchgeführt werden.

24. Verfahren nach einem der Ansprüche 14 bis 23,
**dadurch gekennzeichnet, dass** die Druckerwärmungsmittel durch einen Heiztunnel (4) gebildet sind, der wenigstens einem Paar gegenläufiger Presswalzen (5, 6) zugeordnet ist, um die Membranübereinanderschichtung (14) in dem Tunnel translatorisch vorwärts zu bewegen.

25. Verfahren nach einem der Ansprüche 14 bis 24,
**dadurch gekennzeichnet, dass** es einen zwei getrennte Phasen umfassenden Prozess durchführt, mit einer ersten Phase zur Bildung der Übereinanderschichtung (14) der untereinander haftenden Membranen (15 bis 15d), die es erlaubt, ein lagenförmiges Halbzeug (7) zu erhalten, das zu Stapel (12) gefaltet lager- und transportierbar ist, und einer zweiten Phase, in der die Stapel in den Prozess zur Formgebung des Behälters eingebracht werden.

26. Verwendung eines Behälters nach einem der Ansprüche 1 bis 13 als Dekontaminationsmatte zum Schutz der Eingänge von Krankenhäusern, Kliniken, Laboren, Einrichtungen zur Nahrungsmittelerzeugung und anderen Bereichen, die gegenüber dem Eindringen von Keimen über verunreinigte Schuhsohlen von Besuchern sensibel sind.

## Claims

1. Container for dirty products, being composed of a framework (17) covered by an overlay (14) of membranes (15 to 15d), each of which being provided with means of assembly by adherence, with the adjacent membrane(s) allowing said membranes to be separated one by one by way of peeling, said assembly means being formed by a multitude of mechanically adhering protuberances (16), **characterised in that** each membrane is produced from one single film, itself formed of one material and one layer, and said overlay alternates two types of membrane which are different in their material, the materials of the two types of membrane not being able to be heat-welded together.

2. Container according to claim 1, **characterised in that** said protuberances (16) result from the naturally rough state of the surface of said membranes (15 to 15d).

3. Container according to claim 1, **characterised in that** said protuberances (16) result from the specific treatment of the contact surfaces between them and said membranes (15 to 15d) by local deformation or even by material removal.

4. Container according to one of claims 2 or 3, **characterised in that**, in said overlay (14), one of said two types of membrane (15 to 15d) is polyethylene (PE).

5. Container according to one of claims 2 or 3, **characterised in that**, in said overlay (14), one of said two types of membrane (15 to 15d) is polyethylene terephthalate (PET).

6. Container according to one of claims 2 or 3, **characterised in that**, in said overlay (14), one of said two types of membrane (15 to 15d) is polyvinyl chloride (PVC).

7. Container according to one of claims 2 or 3, **characterised in that**, in said overlay (14), one of said two types of membrane (15 to 15d) is polypropylene (PP).

8. Container according to one of claims 2 or 3, **characterised in that**, in said overlay (14), one of said two types of membrane (15 to 15d) is polystyrene (PS).

9. Container according to one of claims 2 to 8, **characterised in that** the framework (17) is made of cardboard.

10. Container according to one of claims 2 to 8, **characterised in that** the framework (17) is made of fibres which have been compressed and agglomerated using a binder.

11. Container according to one of claims 2 to 8, **characterised in that** the framework (17) is made of foamed plastic material.

12. Container according to one of claims 2 to 8, **characterised in that** the framework (17) is made of a composite material combining a plastic material with at least one natural fibre stemming from agriculture.

13. Container according to claim 12, **characterised in that** the framework (17) is made with a rigid base which contains an easily deformable flexible foam filling.

14. Method for producing said container according to any one of the preceding claims, **characterised in that** the mechanical adherence between the adjacent membranes (15 to 15d) comprising said overlay (14) is implemented using means of compressive heating which produces the interlocking of said protuberances (16) lining their contact surfaces.

15. Method of production according to claim 14, **characterised in that** said means of compressive heating gradually fills the network of interconnected pores (21) which forms, by pushing out every air bubble.

16. Method according to one of claims 14 and 15, **characterised in that** a said semifinished product in the form of a coating (7) is obtained through simultaneous unwinding of plastic films (3 to 3c) stored on reels (2 to 2c), followed by introduction and driving of these films overlaid between at least one pair of compression rollers (5, 6).

17. Method according to one of claims 14 and 15, **characterised in that** a said semifinished product in the form of a coating (7) results from the simultaneous heated coextrusion of the membranes (15 to 15d) forming it, followed by introduction and driving of the overlay of said membranes that are still hot between at least one pair of compression rollers (5, 6).

18. Method according to one of claims 16 and 17, **characterised in that** the semifinished product in the form of a coating is broken into successive panels (10) linked together by a row of flexible hinges (11) created by grooving, allowing reams (12) to be established using an accordion fold, for storage and transport on pallets (13).

19. Method according to claim 18, **characterised in that** said grooving forming said flexible hinges (11) is intermittently penetrated.

20. Method according to one of claims 16 and 17, **characterised in that** the semifinished product in the form of a coating (7) is, at the outlet of a heating zone (4),
grooved at regular intervals with the use of a wheel (8) manoeuvred transversally along a runner (9) to mark out a series of panels (10) which remain connected to each other.

21. Method according to one of claims 14 to 20, **characterised in that** said multitude of protuberances (16) results from the expansion of said membranes (15 to 15d) by introduction of an expanding agent into the plastic material which forms them.

22. Method according to one of claims 14 to 20, **characterised in that** said multitude of protuberances (16) is printed under heat and pressure by passing each of the membranes (15 to 15d) between the embossed compression rollers.

23. Method according to one of claims 14 to 20, **characterised in that** said multitude of protuberances (16) is printed under heat and pressure by passing all the membranes (15 to 15d) forming said overlay (14) between the embossed compression rollers.

24. Method according to according to one of claims 14 to 23, **characterised in that** said means of compressive heating is formed by a heating tunnel (4) connected to at least one pair of counter-rotating compression rollers (5, 6) for the translational driving of said overlay (14) of membranes into said tunnel.

25. Method according to one of claims 14 to 24, **characterised in that** it implements a process comprising two distinct phases: a first phase of formation of the overlay (14) of said membranes (15 to 15d) which stick together, which allows a semifinished product to be obtained in the form of a coating (7), stored and transported folded into reams (12) and a second phase, wherein the reams are added to the process of shaping said container.

26. Use of a container according to one of claims 1 to 13 as decontamination flooring to protect access to hospitals, clinics, laboratories, food production facilities and other areas which are sensitive to the intrusion of germs carried on the dirty soles of visitors' shoes.
